# EUROPÄISCHE PATENTSCHRIFT

(11) **EP 1 456 314 B1**
(45) Veröffentlichungstag und Bekanntmachung des Hinweises auf die Patenterteilung: **04.08.2010**
(21) Anmeldenummer: 02782622.1
(22) Anmeldetag: 18.12.2002
(51) Int. Cl.: C09J 5/06

(54) **VERFAHREN ZUM VERBINDEN VON ZWEI KÖRPERN**
METHOD FOR CONNECTING TWO BODIES
PROCEDE POUR LIER DEUX CORPS

(30) Priorität: 18.12.2001 CH 23122001
(43) Veröffentlichungstag der Anmeldung: 15.09.2004
(73) Patentinhaber: Berner Fachhochschule, Architektur, Holz und Bau BFH-AHB, 2504 Biel (CH)
(72) Erfinder: GFELLER, Balz, CH-2502 Biel (CH); GERBER, Christophe, CH-2952 Cornol (CH)
(74) Vertreter: Bohest AG
(86) Internationale Anmeldenummer: PCT/CH2002/000711
(87) Internationale Veröffentlichungsnummer: WO 2003/052017

(56) Entgegenhaltungen:
- DE-A- 3 045 706
- DE-A- 3 727 187
- GB-A- 1 311 177
- US-A- 4 232 086
- US-B1- 6 312 548

## Beschreibung

Die vorliegende Erfindung bezieht sich auf ein Verfahren zum Verbinden von zwei Körpern, wie es im Oberbegriff des unabhängigen Patentanspruchs 1 definiert ist.

Körper aus Holz oder holzähnlichen Materialien können beispielsweise durch mechanische Verbindungsmittel, wie z.B. Schrauben oder Nägel, oder durch Verleimung verbunden werden, wobei im letzteren Fall üblicherweise auf die beiden zu verbindenden Verbindungsflächen ein Klebstoff aufgebracht wird und die beiden Verbindungsflächen dann während einer von der Art des Klebstoffs abhängigen Trocknungs- oder Erhärtungszeit zusammengepresst werden. In ähnlicher Weise können Körper aus Holz oder holzähnlichen Materialien auch mit Kunststoffkörpern verbunden werden.

Diese Verbindungsverfahren sind bei gewissen Anwendungen nachteilhaft, da sie beispielsweise aufgebrachte Lack- oder Farbschichten verletzen oder verfärben können und/oder eine relativ lange Trocknungs- oder Erhärtungszeit benötigen.

In der WO 96/01377 ist ein alternatives Verfahren zum Verbinden von solchen Körpern offenbart, bei dem zwischen zu verbindenden Verbindungsflächen der Körper eine Thermoplastschicht als Verbindungsmittel angeordnet wird. Die Verbindungsflächen und das dazwischenliegende Verbindungsmittel werden dann aneinander gehalten und mindestens einer der Körper wird mechanisch angeregt, so dass Reibung und in der Folge Reibungswärme erzeugt wird, die die Thermoplastschicht zum Schmelzen bringt. Danach wird die mechanische Anregung gestoppt und der geschmolzene, an beiden Verbindungsflächen haftende Thermoplast kühlt durch Wärmeableitung in die umgebenden Körperteile ab, wodurch er seinen Aggregatszustand ändert und wieder hart wird.

Nachteilhaft bei dieser Verbindung ist, dass das Verbindungsmittel thermoplastisch ist und daher nur eine begrenzte Wärmebeständigkeit hat. Viele Thermoplaste weisen auch 3eïne schlechte Beständigkeit gegen Klimafaktoren, wie z.B. Feuchtigkeit UV-Strahlung, auf. Ausserdem ist die Dissoziationsenergie der Verbindung relativ klein, da während des Verbindens keine chemische Reaktion stattfindet. Schliesslich muss die für den Schmelzvorgang erforderliche Wärmemenge durch Wärmableitung aus dem Bereich der schweissstelle werden, damit die Erhärtung des geschmolzenen Thermoplasten möglich wird. Während dieses Vorgangs müssen die Verbindungsflächen aneinander gehalten werden, d.h. es ist eine Haltezeit nach dem Stoppen der mechanischen Anregung notwendig, welche von den Eigenschaften des Thermoplasten abhängig ist, die vom Verarbeiter nicht einfach beeinflusst werden können.

Die GB 1 311 177 A offenbart ein Verfahren zum Verbinden eines Behälters mit einem Deckel mittels Ultraschallschweissen, wobei das Verbindungsmittel ein vernetzbares Harz sein kann. Das Ultraschallschweissen erfolgt aber mit einer sehr hohen Frequenz von 20 kHz bis 100 kHz, was Auswirkungen auf die Bewegung der zu verbindenden Verbindungsflächen hat.

Angesichts der Nachteile der bisher bekannten, oben beschriebenen Verbindungsverfahren liegt der Erfindung die folgende Aufgabe zugrunde. Zu schaffen ist ein Verfahren zum Verbinden von zwei Körpern der eingangs erwähnten Art, mit dem ein Verbund herstellbar ist, der wärmebeständiger ist als ein vergleichbarer, mit dem in der WO 96/0137, vorgeschlagenen Verfahren hergestellter Verbund. Vorzugsweise sollte ausserdem das Verbindungsverfahren durch den Benutzer besser optimiert und die Verbindung schneller hergestellt werden können.

Diese Aufgabe wird durch das erfindungsgemässe Verfahren gelöst, wie es im unabhängigen Patentanspruch 1 definiert ist. Bevorzugte Ausführungsvarianten ergeben sich aus den abhängigen Patentansprüchen.

Das Wesen der Erfindung besteht im Folgenden: Bei einem Verfahren zum Verbinden von zwei Körpern wird zwischen zu verbindenden Verbindungsflächen der Körper ein Verbindungsmittel angeordnet. Die Verbindungsflächen und das dazwischenliegende Verbindungsmittel werden dann aneinander gehalten und mindestens einer der Körper wird mechanisch angeregt, so dass Reibung und Reibungswärme erzeugt wird. Erfindungsgemäss enthält das Verbindungsmittel mindestens ein vernetzbares Polymer oder polymerisierbares und vernetzbares Harz, das durch die Reibungswärme in einen Duroplast umgewandelt wird. Durch die mechanische Anregung des mindestens einen der Körper werden die zu verbindenden Verbindungsflächen relativ zueinander planparallel bewegt. Die mechanische Anregung des mindestens einen der Körper erfolgt mit einer Frequenz von 50 Hz bis 400 Hz und einer Amplitude von 0,5 mm bis 2 mm.

Dadurch, dass eine Umwandlung in einen Duroplast stattfindet, der bei einer späteren Erwärmung nicht mehr schmilzt, werden das Verbindungsmittel und der Verbund der beiden Körper wesentlich wärmebeständiger. Ausserdem ist auch die Beständigkeit gegen andere Klimafaktoren, wie z.B. Feuchtigkeit, besser.

Für das erfindungsgemässe Verfahren eignen sich insbesondere schmelzbare oder flüssige Polymere oder Harze, so dass durch die Reibungswärme das vernetzbare Polymer oder das polymerisierbare und vernetzbare Harz im Allgemeinen zunächst geschmolzen wird, falls es sich nicht bereits in flüssigem Zustand befindet. Das Polymer oder Harz benetzt so die beiden Verbindungsflächen und dringt in allfällige Poren ein, die beispielsweise bei Holz vorhanden sind. Bei der Umwandlung in einen Duroplast findet dann eine Vernetzung und eventuell auch noch eine Polymerisation statt, also eine chemische Reaktion, welche exotherm verlaufen kann. Die beim Reiben erzeugte Reibungswärme unterstützt diese chemische Reaktion und behindert nicht, wie bei einem Thermoplast, die Härtung. Anders als bei einem thermoplastischen Verbindungsmittel braucht die vorhandene Wärme zur Härtung des Verbindungsmittels somit nicht abgeleitet zu werden, so dass bei geeigneter Wahl der Verfahrensparameter die Haltezeit, während der die beiden Körper nach Beenden des Reibens, d.h. nach Beenden der mechanischen Anregung des mindestens einen Körpers, noch aneinander gehalten werden müssen, praktisch auf Null reduziert werden kann. Die Zeit zur Verbindung zweier Körper kann so im Vergleich zum Stand der Technik wesentlich verkürzt werden.

Ein weiterer Vorteil des erfindungsgemässen Verfahrens zum Verbinden von zwei Körpern besteht darin, dass eine Verbindung mit einer im Allgemeinen höheren Dissoziationsenergie erreicht wird, im Vergleich zu den Verfahren mit thermoplastischen Verbindungsmitteln beispielsweise um einen Faktor 10.

Schliesslich können für das Verbindungsmittel vernetzbare Polymere oder polymerisierbare und vernetzbare Harze-verwendet werden, die im Vergleich zu Thermoplasten zum Teil mehr als 50% billiger sind.

Als Harz wird vorzugsweise ein polymerisierbares und vernetzbares Harz verwendet, dessen Umwandlung in einen Duroplast durch Polykondensation oder Polyaddition erfolgt. Mit Vorteil ist das Polymer oder Harz vorpolymerisiert, insbesondere vorkondensiert, so dass es sich im sogenannten B-Zustand oder Resitol-Zustand befindet. Die unterbrochene Polymerisierung und/oder Vernetzung wird durch Zufuhr von Reibungswärme fortgesetzt, wobei das vorpolymerisierte Polymer bzw. Harz zunächst schmilzt, falls es nicht bereits flüssig ist, und danach irreversibel ausreagiert und den sogenannten C-Zustand oder Resit-Zustand erreicht. Das Vorhandensein eines flüssigen Zwischenzustands des Polymers oder Harzes vor dem festen Endzustand ermöglicht das Benetzen der beiden Verbindungsflächen und somit eine enge Verbindung von Verbindungsmittel und Verbindungsflächen.

Als besonders gut geeignet für das Verbindungsmittel haben sich die folgenden Harze erwiesen: Harnstoff-Formaldehydharz, Melamin-Formaldehydharz, Melamin-Harnstoff-Formaldehydharz, Melamin-Harnstoff-Phenol-Formaldehydharz, Phenol-Formaldehydharz, Resorcin-Formaldehydharz, vernetzbares Isocyanat-Diolharz oder eine Mischung zweier oder mehrerer dieser Harze. Die Umwandlung dieser Harze in einen Duroplast erfolgt durch Polykondensation oder Polyaddition.

Ebenfalls geeignet als Harz sind Epoxidharze, zu einem vernetzbaren Polyurethan polymerisierbare Harze oder als Polymer ein vernetzbares Polyurethan.

Bei einer bevorzugten Ausführungsvariante enthält das Verbindungsmittel einen Härter oder einen Reaktionsverzögerer, welcher kompatibel ist mit dem Reaktionssystem, welches die Umwandlung in einen Duroplast gewährleistet. Der Härter ist beispielsweise ein Ammoniumchlorid oder -sulfat, während der Reaktionsverzögerer beispielsweise Ammoniak oder eine Ammoniumsalzlösung ist. Das Verbindungsverfahren kann mit Hilfe solcher Additive für einen bestimmten Anwendungszweck optimiert werden, insbesondere bezüglich der Aushärte- bzw. Gelierzeit.

Bei einer vorteilhaften Ausführungsvariante enthält das Verbindungsmittel ein Füll- und Streckmittel, vorzugsweise Steinmehl, Holzmehl oder Weizenmehl. Dies ermöglicht es, die Kosten für das Verbindungsmittel zu senken, und kann die Applikation des Verbindungsmittels erleichtern.

Das Verbindungsmittel wird bei vorteilhaften Ausführungsvarianten des erfindungsgemässen Verfahrens in flüssiger Form, pastenförmig oder pulverförmig auf eine der Verbindungsflächen aufgebracht. Insbesondere bei einem pulverförmigen Verbindungsmittel dürfen danach die beiden zu verbindenden Verbindungsflächen nicht zu schnell aufeinanderzubewegt werden, damit das Verbindungsmittel nicht weggeblasen wird. Um dennoch eine hohe Schliessgeschwindigkeit zu ermöglichen, kann die Haftung der Pulverkörner untereinander mittels Erwärmung oder Zugabe von klebenden Stoffen erhöht werden. Dadurch kann das Wegblasen reduziert oder ganz verhindert werden.

Alternativ kann das mindestens eine Polymer oder Harz im Verbindungsmittel in ein flächiges oder strangförmiges Gebilde, insbesondere Papier oder Vlies, imprägniert sein. Das Papiergewicht liegt im Allgemeinen zwischen 10 und 180 g/m², während der Gehalt an Polymer oder Harz bezogen auf das Papiergewicht vorzugsweise im Bereich von 20-350% liegt. Das Vliesgewicht liegt im Allgemeinen zwischen 10 und 120 g/m², während der Gehalt an Polymer oder Harz bezogen auf das Vliesgewicht vorzugsweise im Bereich von 40-200% liegt. Derartige flächige oder strangförmige Gebilde haben den Vorteil, dass sie einfach handhabbar sind.

Bei einer anderen vorteilhaften Ausführungsvariante ist das Verbindungsmittel auf der Verbindungsfläche eines der Körper integral als Bestandteil des Körpers ausgebildet. Auf ein von den zu verbindenden Körpern unabhängiges Verbindungsmittel kann dann verzichtet werden, wodurch die Handhabung vereinfacht wird.

Das Verbindungsmittel kann zwischen den zu verbindenden Verbindungsflächen flächig, strangförmig oder punktförmig angeordnet werden, je nach Anwendungszweck.

Mit Vorteil wird die mechanische Anregung des mindestens einen Körpers spätestens dann gestoppt, wenn die Umwandlung des mindestens einen Polymers oder Harzes in einen Duroplast abgeschlossen ist. Dadurch wird eine mechanische Zerstörung der Schweiss- bzw. Verbindungsstelle verhindert.

Dadurch, dass durch die mechanische Anregung des mindestens einen der Körper die zu verbindenden Verbindungsflächen relativ zueinander planparallel bewegt werden, wird eine relativ grosse Reibung bewirkt, die eine entsprechende Reibungswärme zur Folge hat.

Bei bevorzugten Ausführungsvarianten werden durch die mechanische Anregung des mindestens einen der Körper die zu verbindenden Verbindungsflächen relativ zueinander rotiert oder linear oder orbital bewegt. Diese Bewegungen können mit einer dem Stand der Technik entsprechenden Anlage ausgeführt werden.

Vorzugsweise werden die Verbindungsflächen und das dazwischenliegende Verbindungsmittel während der mechanischen Anregung gegeneinander gepresst. Hierdurch wird ein enger Kontakt zwischen Verbindungsmittel und Verbindungsflächen sichergestellt, wobei bei porösen Körpern, wie z.B. Holz, Verbindungsmittel in die Poren gedrückt wird, was eine bessere Haftung bewirkt.

Das erfindungsgemässe Verfahren zum Verbinden von zwei Körpern läuft im Allgemeinen in mehreren Phasen ab. Beispielsweise wird in einer ersten Phase, der Schliessphase, der eine Körper an den anderen herangeführt, auf dem das Verbindungsmittel angeordnet ist. Der Druck zwischen den beiden Körpern ist zunächst 0 und wächst dann ziemlich rasch auf beispielsweise 0,2 bis 2,5 MPa an, sobald auch der zweite Körper mit dem Verbindungsmittel in Berührung kommt. Die Schliesszeit beträgt zwischen etwa 0,1 und 10 s.

In einer zweiten Phase, der Schweissphase, wird mindestens der eine Körper mechanisch angeregt, und zwar vorzugsweise mit einer Frequenz zwischen etwa 50 und 400 Hz und einer Amplitude zwischen etwa 0,5 und 2 mm. Dadurch entsteht Reibung zwischen den beiden Körpern und dem Verbindungsmittel, welche Wärme erzeugt und die Temperatur des Verbindungsmittels steigt auf ein Maximum von im Allgemeinen etwa zwischen 150°C und 350°C an, wodurch das Verbindungsmittel, sofern es in fester Form angewendet wird, schmilzt. Die Schweisszeit beträgt im Allgemeinen zwischen etwa 0,5 und 20 s.

In einer dritten Phase, der Haltephase, wird der Druck zwischen den beiden Körpern weiterhin aufrecht erhalten, aber die Körper werden nicht mehr mechanisch angeregt. Dadurch wird keine Reibungswärme mehr erzeugt und das Verbindungsmittel kühlt langsam ab. Gleichzeitig wird das Verbindungsmittel fertig polymerisiert und vernetzt, so dass es in einen Duroplast umgewandelt wird. Die Haltephase dauert normalerweise zwischen 0 und 15 s, je nach Verbindungsmittel, wobei eine möglichst kurze Haltezeit angestrebt wird.

Im Anschluss an die Haltephase, sofern eine solche stattfindet, wird der Druck zwischen den beiden Körpern abgebaut.

Mit Hilfe des erfindungsgemässen Verfahrens können Körper verschiedenster Beschaffenheit, beispielsweise aus Holz, Beton, Metall, Glas, Stein oder Kunststoff in kurzer Zeit fest miteinander verbunden werden. Ist zumindest der eine Körper aus Holz, wird vorzugsweise ein Verbindungsmittel verwendet, das mit Holz eine chemische Verbindung eingeht. Beispielsweise kann ein. Verbindungsmittel verwendet werden, das Isocyanat enthält, welches mit Hydroxylgruppen der Zellulose des Holzes chemisch reagiert. Aufgrund der chemischen Reaktion ist die Verbindung zwischen Verbindungsmittel und Körper viel stärker als bei den herkömmlichen Verfahren.

Ein weiterer Aspekt der Erfindung ist ein Verbund von zwei Körpern, bei dem die Körper durch einen Duroplast verbunden sind, wobei der Verbund nach dem oben erläuterten Verfahren hergestellt wird.

Im Folgenden wird das erfindungsgemässe Verfahren zum Verbinden von zwei Körpern unter Bezugnahme auf die beigefügten Zeichnungen anhand von Ausführungsbeispielen detaillierter beschrieben. Es zeigen schematisch:
- Fig. 1 -: das Zusammenfügen von zwei Körpern zum Verbinden derselben mit einem flächig angeordneten Verbin- dungsmittel gemäss einem ersten Ausführungsbei- spiel;
- Fig. 2 -: das Verbinden der beiden Körper von Fig. 1 durch Reibschweissen;
- Fig. 3 -: ein Reibschweissen durch lineare, planparallele Bewegung des einen Körpers;
- Fig. 4 -: ein Reibschweissen durch rotative, planparallele Bewegung des einen Körpers;
- Fig. 5 -: ein Reibschweissen durch orbitale, planparallele Bewegung des einen Körpers;
- Fig. 6 -: ein Diagramm des Ablaufs des Verbindungsverfahrens gemäss dem ersten Ausführungsbeispiel in Bezug auf die Temperatur des Verbindungsmittels und den auf dieses ausgeübten Druck;
- Fig. 7 -: das Zusammenfügen von zwei Körpern zum Verbinden derselben mit einem strangförmig angeordneten Ver- bindungsmittel gemäss einem zweiten Ausführungs- beispiel; und
- Fig. 8 -: das Zusammenfügen von zwei Körpern zum Verbinden derselben mit einem punktförmig angeordneten Ver- bindungsmittel gemäss einem dritten Ausführungs- beispiel.

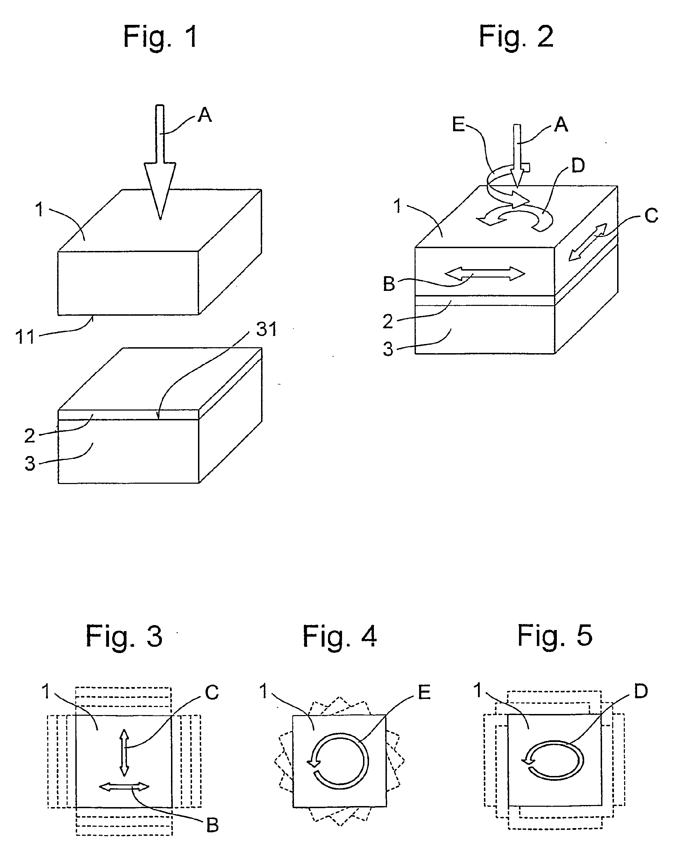

Bei dem in den Fig. 1 bis 6 dargestellten ersten Ausführungsbeispiel werden zwei Körper 1 und 3 mittels eines Verbindungsmittels 2 miteinander verbunden. Die beiden Körper 1, 3 bestehen beispielsweise aus Holz, Beton, Metall, Glas oder Kunststoff und weisen je eine Verbindungsfläche 11 bzw. 31 auf, die durch das Verbindungsmittel 2 miteinander verbunden werden.

Das Verbindungsmittel 2 ist gemäss Fig. 1 flächig auf der Verbindungsfläche 31 des Körpers 3 angeordnet und bedeckt diese vollständig. Es ist hier pastenförmig auf die Verbindungsfläche 31 aufgetragen worden, so dass es auf dieser haftet und beim Heranführen des Körpers 1 in Richtung des Pfeils A durch den Luftdruck nicht weggeblasen wird. Alternativ könnte man das Verbindungsmittel 2 flüssig oder in Pulverform auftragen, dann muss aber das Heranführen des Körpers 1 in Richtung des Pfeils A genügend langsam vorgenommen werden, um die Flüssigkeit oder das Pulver nicht wegzublasen. Um dennoch eine hohe Schliessgeschwindigkeit zu ermöglichen, kann die Haftung der Pulverkörner untereinander mittels Erwärmung.oder Zugabe von klebenden Stoffen erhöht werden. Dadurch kann das Wegblasen reduziert oder ganz verhindert werden. Schliesslich ist auch noch das Aufbringen des Verbindungsmittels in Form eines flächigen Gebildes, insbesondere aus Papier oder Vlies, in das mindestens ein Polymer oder Harz imprägniert ist, oder das integrale Ausbilden des Verbindungsmittel 2 mit dem Körper 3 möglich, beispielsweise indem es mit diesem coextrudiert wird.

Das Verbindungsmittel 2 besteht beispielsweise aus einem vernetzbaren Polymer oder einem polymerisierbaren und vernetzbaren Harz, das durch Wärme in einen Duroplast umwandelbar ist. Das Polymer oder Harz ist mit Vorteil vorpolymerisiert und die unterbrochene Polymerisierung und/oder Vernetzung wird durch Zufuhr von Wärme fortgesetzt, wobei das vorpolymerisierte Polymer bzw. Harz zunächst schmilzt, falls es nicht bereits flüssig ist, und danach irreversibel ausreagiert. Als besonders gut geeignet haben sich die folgenden Harze und Polymere erwiesen: Harnstoff-Formaldehydharz, Melamin-Formaldehydharz, Melamin-Harnstoff-Formaldehydharz, Melamin-Harnstoff-Phenol-Formaldehydharz, Phenol-Formaldehydharz, Resorcin-Formaldehydharz, vernetzbares Isocyanat-Diolharz, Epoxidharze, zu einem vernetzbaren Polyurethan polymerisierbare Harze sowie vernetzbares Polyurethan.

Das Verbindungsmittel 2 kann auch mehrere verschiedene solcher vernetzbarer Polymere oder polymerisierbarer und vernetzbarer Harze sowie Additive, wie z.B. Härter, vorzugsweise ein Ammoniumchlorid oder -sulfat, oder einen Reaktionsverzögerer, vorzugsweise Ammoniak oder eine Ammoniumsalzlösung, und/oder Füll- und Streckmittel, vorzugsweise Steinmehl, Holzmehl oder Weizenmehl, enthalten.

Nachdem der Körper 1 an.den Körper 3 und das Verbindungsmittel 2 herangeführt worden ist, wird er gemäss Pfeil A in Fig. 2 gegen den Körper 3 und das Verbindungsmittel 2 gepresst, wodurch ein Druck aufgebaut wird. Anschliessend wird begonnen, den Körper 1 mechanisch anzuregen, so dass dessen Verbindungsfläche 11 relativ zur Verbindungsfläche 31 des Körpers 3 und zum Verbindungsmittel 2 planparallel bewegt wird, wodurch zwischen der Verbindungsfläche 11, dem Verbindungsmittel 2 und der Verbindungsfläche 31 Reibung und somit Reibungswärme erzeugt wird. Durch die Reibungswärme wird das ganze Verbindungsmittel 2 oder zumindest das oben genannte mindestens eine Polymer oder Harz in einen Duroplast umgewandelt, wobei es vorzugsweise zunächst zum Schmelzen gebracht wird, so dass es die Verbindungsflächen 11 und 31 optimal benetzt. Bei porösen Körpern 1, 3, beispielsweise aus Holz, wird das geschmolzene Verbindungsmittel 2 bzw. Polymer oder Harz durch den durch den Körper 1 ausgeübten Druck ausserdem in die Poren gepresst, was die Verbindung von Verbindungsmittel 2 und Körper 1 bzw. 3 wesentlich verstärkt.

Die planparallele Bewegung der Verbindungsfläche 11 kann auf verschiedene Arten erfolgen. Der Körper 1 mit der Verbindungsfläche 11 kann beispielsweise gemäss den Pfeilen B und C in den Fig. 2 und 3 linear bewegt, gemäss Pfeil E in den Fig. 2 und 4 rotiert oder gemäss Pfeil D in den Fig. 2 und 5 orbital bewegt werden. Die mechanische Anregung des Körpers 1 und die Ausübung eines Drucks in Richtung des Pfeils A kann mittels beliebigen Vorrichtungen des Standes der Technik ausgeführt werden.

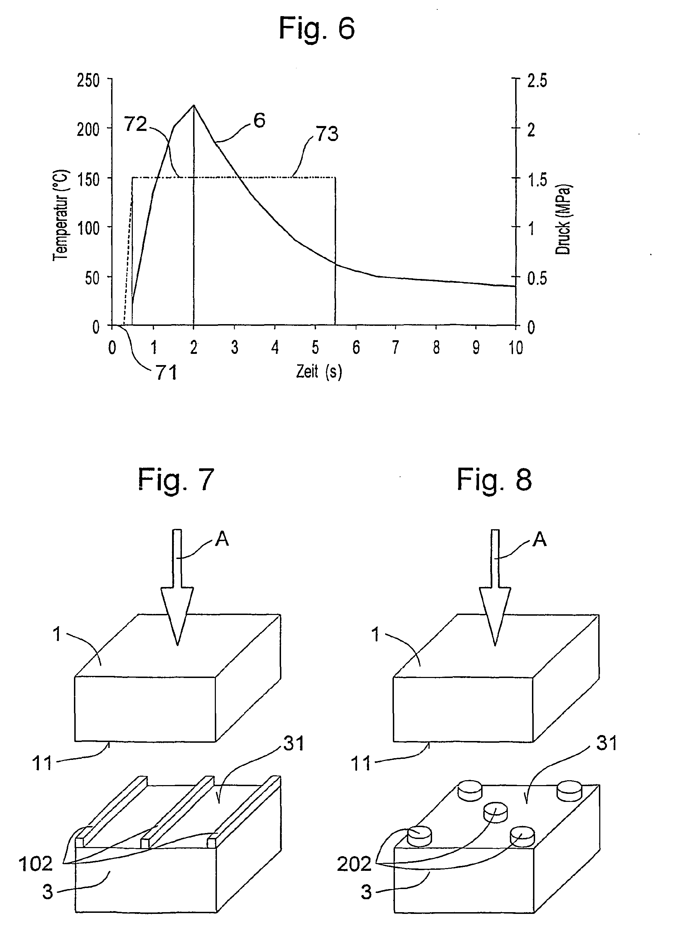

In Fig. 6 ist der Ablauf des Verbindungsverfahrens gemäss dem ersten Ausführungsbeispiel in Bezug auf die Temperatur des Verbindungsmittels 2 und den auf dieses ausgeübten Druck dargestellt. Die Kurve 6 zeigt den Temperaturverlauf des Verbindungsmittels 2 während des Verbindungsverfahrens, wobei die linke Skala gilt. Die Linien 71, 72 und 73 beziehen sich auf den durch den Körper 1 auf das Verbindungsmittel 2 ausgeübten Druck gemäss der rechten Skala. Die Körper 1 und 3 sind hier aus Holz, während das Verbindungsmittel 2 aus Harnstoff-Formaldehydharz besteht.

In einer ersten Phase, der Schliessphase, wird der Körper 1 an den Körper 3 herangeführt, auf dem das Verbindungsmittel 2 angeordnet ist. Das Verbindungsmittel 2 weist Umgebungstemperatur auf. Der Druck 71 ist zunächst 0 und wächst dann ziemlich rasch auf im vorliegenden Fall 1,5 MPa an, sobald der Körper 1 mit dem Verbindungsmittel 2 in Berührung kommt. Die Schliesszeit beträgt etwa 0,5 s.

In einer zweiten Phase, der Schweissphase, wird der Körper 1 mechanisch angeregt, wodurch Reibung zwischen dem Körper 1, dem Verbindungsmittel 2 und dem Körper 3 entsteht, welche Wärme erzeugt. Dadurch steigt die Temperatur 6 des Verbindungsmittels 2 bei gleichbleibendem Druck 72 auf ein Maximum von hier etwa 225°C bei 2 s an und das Verbindungsmittel 2 schmilzt. Die Schweisszeit beträgt etwa 1,5 s.

In einer dritten Phase, der Haltephase, wird der Druck 73 weiterhin aufrecht erhalten, aber der Körper 1 wird nicht mehr mechanisch angeregt. Dadurch wird keine Reibungswärme mehr erzeugt und das Verbindungsmittel 2 kühlt langsam ab. Gleichzeitig wird das Verbindungsmittel 2 fertig polymerisiert und vernetzt, so dass es in einen Duroplast umgewandelt wird.

Bei dem in Fig. 7 dargestellten zweiten Ausführungsbeispiel ist das Verbindungsmittel 102 strangförmig auf der Verbindungsfläche 31 des Körpers 3 angeordnet. Ansonsten gilt das zum ersten Ausführungsbeispiel Gesagte.

Bei dem in Fig. 8 dargestellten dritten Ausführungsbeispiel ist das Verbindungsmittel 202 punktförmig auf der Verbindungsfläche 31 des Körpers 3 angeordnet. Ansonsten gilt das zum ersten Ausführungsbeispiel Gesagte.

Zu den vorbeschriebenen erfindungsgemässen Verfahren sind weitere Variationen realisierbar. Hier ausdrücklich erwähnt sei noch, dass das Verbindungsmittel 2, 102 bzw. 202 anstatt auf der Verbindungsfläche 31 des Körpers 3 zunächst auch auf der Verbindungsfläche 11 des Körpers 1 angeordnet werden kann.

## Patentansprüche

1. Verfahren zum Verbinden von zwei Körpern (1, 3), bei dem zwischen zu verbindenden Verbindungsflächen (11, 31) der Körper (1, 3) ein Verbindungsmittel (2; 102; 202) angeordnet wird, die Verbindungsflächen (11, 31) und das dazwischenliegende Verbindungsmittel (2; 102; 202) aneinander gehalten werden und mindestens einer der Körper (1, 3) mechanisch angeregt wird, so dass Reibung und Reibungswärme erzeugt wird, wobei das Verbindungsmittel (2; 102; 202) mindestens ein vernetzbares Polymer oder polymerisierbares und vernetzbares Harz enthält, das durch die Reibungswärme in einen Duroplast umgewandelt wird, **dadurch gekennzeichnet, dass** durch die mechanische Anregung des mindestens einen der Körper (1, 3) die zu verbindenden Verbindungsflächen (11, 31) relativ zueinander planparallel bewegt werden und die mechanische Anregung des mindestens einen der Körper (1, 3) mit einer Frequenz von 50 Hz bis 400 Hz und einer Amplitude von 0,5 mm bis 2 mm erfolgt.

2. Verfahren nach Anspruch 1, **dadurch gekennzeichnet, dass** ein polymerisierbares und vernetzbares Harz verwendet wird, dessen Umwandlung in einen Duroplast durch Polykondensation oder Polyaddition erfolgt.

3. Verfahren nach Anspruch 1 oder 2, **dadurch gekennzeichnet, dass** das Polymer oder Harz vorpolymerisiert, insbesondere vorkondensiert, ist.

4. Verfahren nach einem der Ansprüche 1 bis 3, **dadurch gekennzeichnet, dass** das Harz bzw. mindestens eines der Harze ein Harnstoff-Formaldehydharz, Melamin-Formaldehydharz, Melamin-Harnstoff-Formaldehydharz, Melamin-Harnstoff-Phenol-Formaldehydharz, Phenol-Formaldehydharz, Resorcin-Formaldehydharz, vernetzbares Isocyanat-Diolharz oder eine Mischung zweier oder mehrerer dieser Harze ist.

5. Verfahren nach einem der Ansprüche 1 bis 4, **dadurch gekennzeichnet, dass** das Harz bzw. mindestens eines der Harze ein Epoxidharz oder ein zu einem vernetzbaren Polyurethan polymerisierbares Harz oder das Polymer bzw. mindestens eines der Polymere ein vernetzbares Polyurethan ist.

6. Verfahren nach einem der Ansprüche 1 bis 5, **dadurch gekennzeichnet, dass** das Verbindungsmittel (2; 102; 202) einen Härter, vorzugsweise ein Ammoniumchlorid oder -sulfat, oder einen Reaktionsverzögerer, vorzugsweise Ammoniak oder eine Ammoniumsalzlösung, und/oder ein Füll- und Streckmittel, vorzugsweise Steinmehl, Holzmehl oder Weizenmehl, enthält.

7. Verfahren nach einem der Ansprüche 1 bis 6, **dadurch gekennzeichnet, dass** das Verbindungsmittel (2; 102; 202) in flüssiger Form, pastenförmig oder pulverförmig auf eine der Verbindungsflächen (11, 31) aufgebracht wird.

8. Verfahren nach einem der Ansprüche 1 bis 6, **dadurch gekennzeichnet, dass** das mindestens eine Polymer oder Harz im Verbindungsmittel (2; 102; 202) in ein flächiges oder strangförmiges Gebilde, insbesondere Papier oder Vlies, imprägniert ist.

9. Verfahren nach einem der Ansprüche 1 bis 6, **dadurch gekennzeichnet, dass** das Verbindungsmittel (2; 102; 202) auf der Verbindungsfläche (11, 31) eines der Körper (1, 3) integral als Bestandteil des Körpers (1, 3) ausgebildet ist.

10. Verfahren nach einem der Ansprüche 1 bis 9, **dadurch gekennzeichnet, dass** die mechanische Anregung des mindestens einen Körpers (1, 3) spätestens dann gestoppt wird, wenn die Umwandlung des mindestens einen Polymers oder Harzes in einen Duroplast abgeschlossen ist.

11. Verfahren nach einem der Ansprüche 1 bis 10, **dadurch gekennzeichnet, dass** durch die mechanische Anregung des mindestens einen der Körper (1, 3) die zu verbindenden Verbindungsflächen (11, 31) relativ zueinander planparallel linear bewegt werden.

12. Verfahren nach einem der Ansprüche 1 bis 11, **dadurch gekennzeichnet, dass** durch die mechanische Anregung des mindestens einen der Körper (1, 3) die zu verbindenden Verbindungsflächen (11, 31) relativ zueinander planparallel rotiert werden.

13. Verfahren nach einem der Ansprüche 1 bis 12, **dadurch gekennzeichnet, dass** durch die mechanische Anregung des mindestens einen der Körper (1, 3) die zu verbindenden Verbindungsflächen (11, 31) relativ zueinander planparallel orbital bewegt werden.

14. Verfahren nach einem der Ansprüche 1 bis 13, **dadurch gekennzeichnet, dass** die Verbindungsflächen (11, 31) und das dazwischenliegende Verbindungsmittel (2; 102; 202) während der mechanischen Anregung gegeneinander gepresst werden.

15. Verfahren nach einem der Ansprüche 1 bis 14, **dadurch gekennzeichnet, dass** mindestens einer der Körper (1, 3) aus Holz ist und ein Verbindungsmittel (2; 102; 202) verwendet wird, das mit Holz eine chemische Verbindung eingeht.

## Claims

1. Method for connecting two bodies (1, 3), in which a connection means (2; 102; 202) is arranged between connection surfaces (11, 31) to be connected of the bodies (1, 3), the connection surfaces (11, 31) and the interlying connection means (2; 102; 202) are held together and at least one of the bodies (1, 3) is mechanically stimulated, so that friction and frictional heat is produced, wherein the connection means (2; 102; 202) contains at least one cross-linkable polymer or polymerisable and cross-linkable resin, which through the frictional heat is converted into a duroplastic, **characterised in that** through the mechanical stimulation of the at least one of the bodies (1, 3) the connection surfaces (11, 31) to be connected are moved relative to each other plane-parallelly and the mechanical stimulation of the at least one of the bodies (1, 3) takes place with a frequency of 50 Hz to 400 Hz and an amplitude of 0.5 mm to 2 mm.

2. Method according to claim 1, **characterised in that** a polymerisable and cross-linkable resin is used, whose conversion into a duroplastic results from polycondensation or polyaddition.

3. Method according to claim 1 or 2, **characterised in that** the polymer or resin is pre-polymerised, in particular precondensed.

4. Method according to any one of claims 1 to 3, **characterised in that** the resin or at least one of the resins is a urea formaldehyde resin, melamine formaldehyde resin, melamine urea formaldehyde resin, melamine urea phenol formaldehyde resin, phenol formaldehyde resin, resorcin formaldehyde resin, cross-linkable isocyanate diol resin or a mixture of two or more of these resins.

5. Method according to any one of claims 1 to 4, **characterised in that** the resin or at least one of the resins is an epoxy resin or a resin polymerisable to a cross-linkable polyurethane or the polymer or at least one of the polymers is a cross-linkable polyurethane.

6. Method according to any one of claims 1 to 5, **characterised in that** the connection means (2; 102; 202) contains a hardener, preferably an ammonium chloride or ammonium sulphate, or a reaction retarder, preferably ammonia or an ammonium salt solution, and/or a filler and extender means, preferably stone dust, wood dust or wheat dust.

7. Method according to any one of claims 1 to 6, **characterised in that** the connection means (2; 102; 202) is applied in a liquid form, paste form or powder form on one of the connection surfaces (11, 31).

8. Method according to any one of claims 1 to 6, **characterised in that** the at least one polymer or resin in the connection means (2; 102; 202) is impregnated in a flat or rope shaped object, in particular paper or fleece.

9. Method according to any one of claims 1 to 6, **characterised in that** the connection means (2; 102; 202) is integrally formed on the connection surface (11, 31) of one of the bodies (1, 3) as a component of the body (1, 3).

10. Method according to any one of claims 1 to 9, **characterised in that** the mechanical stimulation of the at least one body (1, 3) is then stopped at the latest when the conversion of the at least one polymer or resin into a duroplastic is completed.

11. Method according to any one of claims 1 to 10, **characterised in that** through the mechanical stimulation of the at least one of the bodies (1, 3) the connection surfaces (11, 31) to be connected are moved relative to each other plane-parallel linearly.

12. Method according to any one of claims 1 to 11, **characterised in that** through the mechanical stimulation of the at least one of the bodies (1, 3) the connection surfaces (11, 31) to be connected are moved relative to each other plane-parallel rotationally.

13. Method according to any one of claims 1 to 12, **characterised in that** through the mechanical stimulation of the at least one of the bodies (1, 3) the connection surfaces (11, 31) to be connected are moved relative to each other plane-parallel orbitally.

14. Method according to any one of claims 1 to 13, **characterised in that** the connection surfaces (11, 31) and the interlying connection means (2, 102; 202) are pressed against each other during the mechanical stimulation.

15. Method according to any one of claims 1 to 14, **characterised in that** at least one of the bodies (1, 3) is made out of wood and a connection means (2; 102 202) that chemically combines with wood is used.

## Revendications

1. Procédé pour relier deux corps (1, 3) selon lequel un moyen de liaison (2; 102; 202) est disposé entre les deux surfaces de liaison (11, 31) devant être reliées des corps (1, 3), les surfaces de liaison (11, 31) et le moyen de liaison (2; 102; 202) situé entre celles-ci étant maintenus les uns contre les autres, et au moins l'un des corps (1, 3) étant sollicité mécaniquement de façon à produire une friction et de la chaleur de friction, le moyen de liaison (2; 102; 202) comportant au moins un polymère réticulable ou une résine polymérisable et réticulable qui est transformé en un matériau thermodurcissable par la chaleur de friction,
**caractérisé en ce que**
sous l'action de la sollicitation mécanique d'au moins l'un des corps (1, 3), les surfaces de liaison (11, 31) devant être reliées sont déplacées de manière parallélinement plane l'une par rapport à l'autre, et la sollicitation mécanique d'au moins l'un des corps (1, 3) est effectuée avec une fréquence de 50 Hz à 400 Hz et une amplitude de 0,5 mm à 2 mm.

2. Procédé conforme à la revendication 1,
**caractérisé en ce que**
l'on utilise une résine polymérisable et réticulable dont la transformation en un matériau thermodurcissable s'effectue par polycondensation ou par polyaddition.

3. Procédé conforme à la revendication 1 ou 2,
**caractérisé en ce que**
le polymère ou la résine est pré-polymérisé, en particulier pré-condensé.

4. Procédé conforme à l'une des revendications 1 à 3,
**caractérisé en ce que**
la résine ou au moins l'une des résines est une résine urée-formaldehyde, une résine mélamine-formaldehyde, une résine mélamine-urée-formaldehyde, une résine mélamine-urée-phénol-formaldehyde, une résine phénol-formaldehyde, une résine resorcinol-formaldehyde, une résine isocyanate-diol réticulable, ou un mélange de deux ou d'un plus grand nombre de ces résines.

5. Procédé conforme à l'une des revendications 1 à 4,
**caractérisé en ce que**
la résine ou au moins l'une des résines est une résine époxy ou une résine polymérisable en un polyuréthane réticulable, ou le polymère ou au moins l'un des polymères est un polyuréthane réticulable.

6. Procédé conforme à l'une des revendications 1 à 5,
**caractérisé en ce que**
le moyen de liaison (2; 102; 202) comporte un durcisseur, de préférence un sulfate ou un chlorure d'ammonium, ou un retardateur de réaction, de préférence l'ammoniac ou une solution de sel d'ammonium, et/ou un agent de charge et de dilution, de préférence de la chaux en poudre, de la farine de bois ou de la farine de froment.

7. Procédé conforme à l'une des revendications 1 à 6,
**caractérisé en ce que**
le moyen de liaison (2; 102; 202) est appliqué sous forme liquide, pâteuse ou pulvérulente sur l'une des surface de liaison (11, 31).

8. Procédé conforme à l'une des revendications 1 à 6,
**caractérisé en ce que**
le ou les polymère(s) ou la ou les résine(s) sont imprégnés dans le moyen de liaison (2; 102; 202) dans un produit sous forme de nappe ou de ruban, en particulier du papier ou un non tissé.

9. Procédé conforme à l'une des revendications 1 à 6,
**caractérisé en ce que**
le moyen de liaison (2; 102; 202) est formé intégralement sur la surface de liaison (11, 31) de l'un des corps (1, 3), en tant que constituant de celui-ci.

10. Procédé conforme à l'une des revendications 1 à 9,
**caractérisé en ce que**
la sollicitation mécanique du ou des corps (1, 3) est au plus tard arrêtée lorsque la transformation du ou des polymère(s) ou de la ou des résine(s) en un matériau thermodurcissable est achevée.

11. Procédé conforme à l'une des revendications 1 à 10,
**caractérisé en ce que**
sous l'action de la sollicitation mécanique du ou des corps (1, 3) les surfaces de liaison (11, 31) devant être reliées sont déplacées linéairement parallèlement à un plan l'une par rapport à l'autre.

12. Procédé conforme à l'une des revendications 1 à 11,
**caractérisé en ce que**
sous l'action de la sollicitation mécanique du ou des corps (1, 3) les surfaces de liaison (11, 31) devant être reliées sont déplacées en rotation parallèlement à un plan l'une par rapport à l'autre.

13. Procédé conforme à l'une des revendications 1 à 12,
**caractérisé en ce que**
sous l'action de la sollicitation mécanique du ou des corps (1, 3) les surfaces de liaison (11, 31) devant être reliées sont déplacées de manière orbitale parallèlement à un plan l'une par rapport à l'autre.

14. Procédé conforme à l'une des revendications 1 à 13,
**caractérisé en ce que**
les surfaces de liaison (11, 31) et le moyen de liaison (2; 102; 202) situés entre ces surfaces sont comprimées les uns contre les autres pendant la sollicitation mécanique.

15. Procédé conforme à l'une des revendications 1 à 14,
**caractérisé en ce que**
au moins un des corps (1, 3) est en bois et on l'utilise un moyen de liaison (2; 102; 202) qui forme une liaison chimique avec le bois.
